# EUROPEAN PATENT APPLICATION

(11) **EP 4 057 278 A1**
(43) Date of publication of application: **14.09.2022**
(21) Application number: 22161092.6
(22) Date of filing: 09.03.2022
(51) Int. Cl.: G10L 15/22, G06F 3/16

(54) **SYSTEMS AND METHODS FOR IMPROVED SPEECH AND COMMAND DETECTION**

(30) Priority: 10.03.2021 US 202117197966
(71) Applicant: Comcast Cable Communications, LLC, Philadelphia, PA 19103 (US)
(72) Inventor: MIN, Rui, Washington, 20005 (US); DEICHMANN, Stefan, Washington, 20005 (US); SABRAW, Mariel, Washington, 20005 (US); MAO, Yajie, Washington, 20005 (US)
(74) Representative: V.O.

(57) **Abstract**

Provided herein are systems and methods for improved speech and command detection. For example, a user utterance may be received by a voice-enabled device. The voice-enabled device and associated system may determine that a first portion of the utterance comprises a complete command, and begin processing the command for execution. Thereafter, the device may receive an additional utterance and determine the additional utterance to be a second portion, related to the first portion, and together with the first portion comprise a different command. The device and associated system can then adjust and process the intended command.

## Description

### CROSS-REFERENCE TO RELATED PATENT APPLICATION

This application claims priority to U.S. Non-Provisional App. No. 17/197,966, filed on March 10, 2021, the entirety of which is incorporated by reference herein.

### BACKGROUND

Devices capable of being voice-controlled (e.g., voice-enabled devices) are often located in noisy environments. In such environments, ambient and background sounds may affect how user utterances received by the devices are transcribed. For example, a device in a noisy environment may be unable to determine when a user utterance is complete, because the ambient and background sounds may be captured as part of the user utterance. Existing solutions attempt to account for noisy environments, however, they do not provide a level of performance that is necessary for a high-quality user experience. These and other considerations are described herein.

### SUMMARY

It is to be understood that both the following general description and the following detailed description are exemplary and explanatory only and are not restrictive. Provided herein are methods and systems for processing user utterances. A user utterance may be one or more words spoken by a user and captured as audio by a voice-enabled device. For example, the user utterance may be a voice command or a query, and the voice-enabled device may be an assistance device, a smart remote control, a mobile device, etc. The user utterance (e.g., the captured audio) may be processed by a computing device, such as a media device, a server, etc. The computing device may receive a first portion of the user utterance, such as one or more spoken words or phrases. The computing device may transcribe the first portion of the user utterance. The computing device may determine that the first portion is indicative of a first command or query. For example, a transcription of the first portion of the user utterance may be indicative of the first command or query, such as "Show me free movies."

The computing device may employ processing rules to determine that the transcription of the first portion of the user utterance is indicative of the first command or query. The processing rules may facilitate a technique referred to herein as command boosting. A technique referred to herein as tail sampling may be employed by the voice-enabled device and/or the computing device to capture (e.g., attempt to detect) additional sounds/audio following execution of a command or query. Tail sampling may be used to improve user utterance processing and to ensure that processing rules for command boosting do not adversely affect user experience. For example, the computing device may use tail sampling and determine that the user utterance comprises a second portion. The computing device may determine that the second portion is indicative of a portion of a second command or query. For example, the second portion of the user utterance may comprise the phrase "on FutureFlix," and the second command or query in entirety may comprise "Show me free movies on FutureFlix." The computing device may determine that the first portion of the user utterance was in fact a portion of the entirety of the second command or query. The computing device may cause a processing rule(s) for command boosting to be disabled, modified, etc., to prevent incomplete commands, such as the first portion of the user utterance, from being executed prematurely. Similar disabling of processing rules may be applied to a group of user devices - or users thereof
- when similar determinations are made regarding user utterances. Additional advantages will be set forth in part in the description which follows or may be learned by practice. The advantages will be realized and attained by means of the elements and combinations particularly pointed out in the appended claims.

### BRIEF DESCRIPTION OF THE DRAWINGS

The accompanying drawings, which are incorporated in and constitute a part of the present description serve to explain the principles of the methods and systems described herein:
Figure 1 shows an example system;
Figure 2 shows an example data table;
Figure 3 shows an example data table;
Figure 4 shows a flowchart for an example method;
Figure 5 shows an example system;
Figure 6 shows a flowchart for an example method;
Figure 7 shows a flowchart for an example method;
Figure 8 shows a flowchart for an example method; and
Figure 9 shows a flowchart for an example method.

### DETAILED DESCRIPTION

As used in the specification and the appended claims, the singular forms "a," "an," and "the" include plural referents unless the context clearly dictates otherwise.

Ranges may be expressed herein as from "about" one particular value, and/or to "about" another particular value. When such a range is expressed, another configuration includes from the one particular value and/or to the other particular value. Similarly, when values are expressed as approximations, by use of the antecedent "about," it will be understood that the particular value forms another configuration. It will be further understood that the endpoints of each of the ranges are significant both in relation to the other endpoint, and independently of the other endpoint.

"Optional" or "optionally" means that the subsequently described event or circumstance may or may not occur, and that the description includes cases where said event or circumstance occurs and cases where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of' and is not intended to convey an indication of a preferred or ideal configuration. "Such as" is not used in a restrictive sense, but for explanatory purposes.

It is understood that when combinations, subsets, interactions, groups, etc. of components are described that, while specific reference of each various individual and collective combinations and permutations of these may not be explicitly described, each is specifically contemplated and described herein. This applies to all parts of this application including, but not limited to, steps in described methods. Thus, if there are a variety of additional steps that may be performed it is understood that each of these additional steps may be performed with any specific configuration or combination of configurations of the described methods.

As will be appreciated by one skilled in the art, hardware, software, or a combination of software and hardware may be implemented. Furthermore, a computer program product on a computer-readable storage medium (e.g., non-transitory) having processor-executable instructions (e.g., computer software) embodied in the storage medium. Any suitable computer-readable storage medium may be utilized including hard disks, CD-ROMs, optical storage devices, magnetic storage devices, memresistors, Non-Volatile Random Access Memory (NVRAM), flash memory, or a combination thereof.

Throughout this application reference is made to block diagrams and flowcharts. It will be understood that each block of the block diagrams and flowcharts, and combinations of blocks in the block diagrams and flowcharts, respectively, may be implemented by processor-executable instructions. These processor-executable instructions may be loaded onto a general purpose computer, special purpose computer, or other programmable data processing apparatus to produce a machine, such that the processor-executable instructions which execute on the computer or other programmable data processing apparatus create a device for implementing the functions specified in the flowchart block or blocks.

These processor-executable instructions may also be stored in a computer-readable memory that may direct a computer or other programmable data processing apparatus to function in a particular manner, such that the processor-executable instructions stored in the computer-readable memory produce an article of manufacture including processor-executable instructions for implementing the function specified in the flowchart block or blocks. The processor-executable instructions may also be loaded onto a computer or other programmable data processing apparatus to cause a series of operational steps to be performed on the computer or other programmable apparatus to produce a computer-implemented process such that the processor-executable instructions that execute on the computer or other programmable apparatus provide steps for implementing the functions specified in the flowchart block or blocks.

Blocks of the block diagrams and flowcharts support combinations of devices for performing the specified functions, combinations of steps for performing the specified functions and program instruction means for performing the specified functions. It will also be understood that each block of the block diagrams and flowcharts, and combinations of blocks in the block diagrams and flowcharts, may be implemented by special purpose hardware-based computer systems that perform the specified functions or steps, or combinations of special purpose hardware and computer instructions.

Provided herein are methods and systems for improved speech and command detection. For example, the present methods and systems may be employed to improve processing of user utterances received by voice-enabled devices. A user utterance may be a word or phrase corresponding to a command or a query. A user utterance may be received by a voice-enabled device and provided to an automatic speech recognition ("ASR") engine and/or an audio cache for transcription. The transcribed user utterance may be ultimately converted into an actionable command or query, such as "Turn off the TV," "Show me free movies," "Play some music," etc.

For example, a voice-enabled device may be a voice assistant device, a remote control for a media device, such as a set-top box, a television, etc. The remote control, for example, may detect a user speaking and begin capturing audio comprising a user utterance. The remote control may inadvertently capture audio/sounds associated with people talking and/or ambient noise nearby when capturing the user utterance, which may impact a determination of when the user has finished speaking the command or query (e.g., an endpoint of the user utterance). For example, the remote control may capture a first portion of the user utterance, but the audio/sounds associated with people talking and/or ambient noise may be captured by the remote control instead of - or along with - audio/sound of the user speaking another portion(s) of the command or query. Consequently, the user utterance may not be transcribed correctly by the ASR engine and/or the audio cache, and the associated command or query may not be executed properly - or it may not be executed at all. For example, only the first portion of the command or query may be executed if the other portion(s) of the command or query is subsumed by (e.g., lost within, from a processing standpoint) the audio/sounds associated with people talking and/or ambient noise.

Many voice-enabled devices employ endpoint detection methods that attempt to detect a period of silence (e.g., low audio energy) in order to determine that a user utterance is complete (e.g., the user has finished speaking a command or query). The present methods and systems provide more efficient endpoint detection techniques. These techniques may improve overall processing efficiency and accuracy of user utterances received by voice-enabled devices. For example, a computing device may receive a first portion of a first user utterance. The computing device may be a video player, set-top box, a television, a server, etc., in communication with a user device at which the user provides the user utterance (e.g., by speaking). The user device may be a voice-enabled device, such as a voice-enabled remote control, that captures audio comprising the first utterance.

The first portion of the first user utterance may be provided to an ASR engine, an audio fingerprint matching service, and/or an audio cache for transcription, comparison, and/or analyses. The computing device may determine that the first portion is indicative of a first command or query. For example, the computing device may receive a transcription from the ASR engine and/or the audio cache indicating that the first portion of the user utterance is "Show me free movies." The computing device may determine that "Show me free movies" is a valid command or query. The computing device, or an associated computing device, may be configured to employ a technique referred to herein as command boosting. Command boosting may comprise the computing device causing a command or query to be executed (e.g., processed and then executed) when a user utterance, or a portion thereof, is indicative of a valid command or query. In the above example, the computing device may employ command boosting based on the transcription indicating that the first portion of the user utterance is "Show me free movies" and the determination that "Show me free movies" is a valid command or query. For example, a first processing rule for command boosting may indicate that portions of user utterances that are determined to be indicative of the command or query of "Show me free movies" are to be executed immediately upon making such determination (e.g., without processing any further portions of captured audio).

The computing device may determine a level of confidence that transcriptions of user utterances are correct and/or complete. Continuing with the above example, the computing device may use a plurality of context-based rules to determine the level of confidence. An example context-based rule may comprise a command or query, such as "Show me free movies," a context, such as "Media Device is powered on," and a level of confidence, such as "80%." The user device may indicate to the computing device that the first user utterance was received at a time during which a media device associated with the user device was powered on. The computing device may determine the level of confidence associated with the first portion of the first user utterance is therefore 80%. The computing device may be configured such that commands and queries having a confidence level that does not satisfy a threshold are caused not to be boosted. For example, the threshold may be "greater than 65%," and an example confidence level that does not satisfy the threshold may be less than or equal to 65%. In the example above regarding the first user utterance, the first command or query may be boosted, since the level of confidence associated with the first portion of the first user utterance is 80% (e.g., greater than 65%).

To improve accuracy and, for example, to determine whether the user finished speaking a command, the user device and/or the computing device may be configured to employ a technique referred to herein as tail sampling. Tail sampling may be employed to improve endpoint detection. Tail sampling may comprise the user device and/or the computing device continuing to capture (e.g., attempt to detect) additional sounds/audio following execution of a valid command or query for a period of time (e.g., a quantity of milliseconds, seconds, etc.). Continuing with the above example, despite the computing device having caused the first command or query of "Show me free movies" to be executed, the user device and/or the computing device may use tail sampling to determine whether the first user utterance was in fact complete. For example, during the period of time during which tail sampling is performed, the computing device may determine that the user utterance comprises a second portion.

The computing device may determine that the second portion is indicative of a portion of a second command or query. For example, the computing device may receive a transcription from the ASR engine and/or the audio cache indicating that the second portion of the user utterance is "on FutureFlixFutureFlix." The computing device may determine that "on FutureFlix" is a portion of a valid second command or query of "Show me free movies on FutureFlix." The computing device may cause a processing rule(s) for command boosting to be disabled in order to improve user experience. For example, based on the transcription indicating that the second portion of the user utterance is "on FutureFlix" and the determination that "on FutureFlix" is a portion of a valid second command or query of "Show me free movies on FutureFlix," the computing device may cause a corresponding processing rule(s) for command boosting to be disabled to prevent incomplete commands from being executed prematurely. Similar disabling of processing rules may be applied to a group of user devices - or users thereof - when similar determinations are made regarding user utterances.

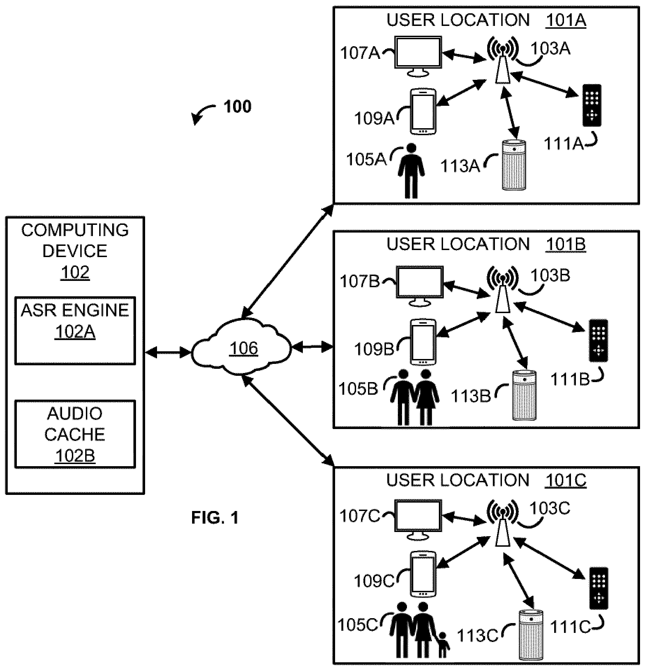

**FIG. 1** shows a block diagram of an example system **100** for improved speech and command detection. The system **100** may comprise a computing device **102** having an Automatic Speech Recognition ("ASR") engine **102A** and/or an audio cache **102B** resident thereon, and may also have an audio fingerprint analysis engine (not shown). The computing device **102** may process (e.g., transcribe) user utterance data via one or more of the ASR engine **102A** or the audio cache **102B.** For example, the ASR engine **102A** may receive user utterance data and generate a transcription of words or phrases (e.g., user utterances) indicated by the user utterance data using, as an example, an acoustic model. The computing device **102** may use the audio cache **102B** to generate transcriptions for user utterances. The audio cache **102B** may store samples of prior user utterance data along with corresponding words and/or phrases. The audio cache **102B** may process new user utterance data by determining which of the stored samples of prior user utterance data most closely corresponds to (e.g., matches) the user utterance data.

The system **100** may comprise a plurality of user locations **101A, 101B, 101C.** Each of the plurality of user locations **101A, 101B, 101C** may be associated with a user(s) **105A, 105B, 105C** and plurality of computing devices in communication with the computing device **102** via a network **106.** The network **106** may be an optical **106** fiber network, a coaxial cable network, a hybrid fiber-coaxial network, a wireless network, a satellite system, a direct broadcast system, an Ethernet network, a high-definition multimedia interface network, a Universal Serial Bus (USB) network, or any combination thereof. Data may be sent by or to any of the plurality of computing devices via a variety of transmission paths of the network **106,** including wireless paths (e.g., satellite paths, Wi-Fi paths, cellular paths, etc.) and terrestrial paths (e.g., wired paths, a direct line, etc.).

The plurality of computing devices at each of the plurality of user locations **101A, 101B, 101C** may comprise a gateway device **103A, 103B, 103C** (e.g., a router, access point, etc.), a media device **107A, 107B, 107C** (e.g., set-top box, laptop, desktop, smart TV, etc.), a user device **109A, 109B, 109C,** a remote control **111A, 111B, 111C,** and/or a smart device **113A, 113B, 113C.** While each of the plurality of user locations **101A, 101B, 101C** are shown in **FIG. 1** as having only one gateway device **103A, 103B, 103C** (e.g., a router, access point, etc.), one media device **107A, 107B, 107C** (e.g., set-top box, laptop, desktop, smart TV, etc.), one user device **109A, 109B, 109C,** one remote control **111A, 111B, 111C,** and one smart device **113A, 113B, 113C,** it is to be understood that each of the plurality of user locations **101A, 101B, 101C** may include more than one of each of the aforementioned devices. Further, it is to be understood that each of the plurality of user locations **101A, 101B, 101C** may not include all of the aforementioned devices, although each is shown in **FIG. 1** as including at least one of each. The user device **109A, 109B, 109C** and/or the smart device **113A, 113B, 113C** may be a computing device, a smart speaker, an Internet-capable device, a sensor, a light bulb, a camera, an actuator, an appliance, a game controller, audio equipment, one or more thereof, and/or the like.

Any of the aforementioned computing devices at the plurality of user locations **101A, 101B, 101C** (collectively referred to as "user devices") may be capable of processing user utterances. For example, each of the user devices may have an ASR engine (e.g., similar to the ASR engine **102A)** and/or an audio cache (e.g., similar to the audio **102B)** resident thereon or otherwise in communication therewith (e.g., at a server). A user utterance may be a word or phrase corresponding to a command or a query. Any of the computing devices at the plurality of user locations **101A, 101B, 101C** may be voice-enabled and capable of receiving and/or processing user utterances. For example, the user **105A** at the user location **101A** may use the remote control **111A** to speak a word or phrase indicative of a command or query, such as "Play some music." The remote control **111A** may receive (e.g., detect) the user utterance via a microphone. The remote control **111A** may provide data indicative of the user utterance - referred to herein as "user utterance data" - to the computing device **102** for processing. As further described herein, the computing device **102** may use the one or more of the ASR engine **102A** or the audio cache **102B** to process the user utterance data and determine a transcription of the user utterance. The transcribed user utterance may be ultimately converted into an actionable command or query, such as "Play some music." The computing device **102** may cause the command or query to be executed based on the transcription. For example, the computing device **102** may cause the media device **107A** and/or the smart device **113A** to begin playing music.

When the computing devices at the plurality of user locations **101A, 101B, 101C** are located in a noisy environment, ambient and background sounds may affect how user utterances are transcribed and ultimately converted into actionable commands or queries. For example, the remote control **111A** may be located where ambient noise is ever-present. Ambient noise include the user **105A** and/or other people talking, appliances, pets, cars, weather, a combination thereof, and/or the like. The user **105A** may speak a command or a query to the remote control **111A.** The remote control **111A** may detect the user **105A** speaking and begin capturing the sound as a user utterance. The remote control **111A** may inadvertently capture sounds associated with the ambient noise nearby when capturing the user utterance, which may impact a determination of when the user **111A** has finished speaking the command or query (e.g., an end of the user utterance). Consequently, the user utterance may not be transcribed correctly by the ASR engine **102A** and/or the audio cache **102B,** and the associated command or query may not be executed properly - or it may not be executed at all.

The system **100** may account for the user devices being located in such noisy environments and therefore provide an improved user experience with regard to processing user utterances, such as commands or queries. As described herein, any of the user devices of the system **100** may be voice-enabled devices. Determining when a user of a voice-enabled device has completed speaking a user utterance, such as a command or query, is known as "endpoint detection." Many voice-enabled devices employ endpoint detection methods that attempt to detect a period of silence (e.g., low audio energy) in order to determine that a user utterance is complete (e.g., the user has finished speaking the command or query). For some voice-enabled devices, such as the smart device **113A, 113B, 113C,** latency caused by inefficient endpoint detection may not be as apparent to a user. For other types of voice-enabled devices, such as the remote control **111A, 111B, 111C,** the latency may be more apparent due to user interfaces that typically accompanies such devices. For example, the remote control **111A** may be used to control the media device **107A.** The media device **107A** may provide a user interface, such as an electronic programming guide ("EPG"), and user utterances (e.g., commands and/or queries) may relate to controlling aspects of the EPG, such as navigating therein. As a result, latency in processing a command or a query associated with navigating within the EPG may be more noticeable to a user of the media device **107A.**

As discussed herein, the user devices of the system **100** may be located in noisy environments, which may complicate endpoint detection. The system **100** may provide more efficient endpoint detection techniques. These techniques may improve overall processing efficiency and accuracy of user utterances received by the user devices of the system **100.** Many commands and queries include specific patterns, and the system **100** may recognize such commands and queries by using pattern matching techniques. An example pattern may be "[POWER COMMAND] the [DEVICE NAME]," where the "Power Command" may be "Turn on" or "Turn off," and the "Device Name" may be "television," "TV," "speaker," "stereo," "projector," "XBOX^{™}," "PlayStation^{™}," etc. Another example pattern may be "[TRICK PLAY COMMAND] [NUMBER] [TIME UNITS]," where the "Trick Play Command" may be "fast-forward," "rewind," etc., the "Number" may be a whole number (e.g., "1"), and the "Time Units" may be a quantity of "seconds," "minutes," "hours," etc. A further example pattern may be "[CONTENT TITLE] on [CONTENT SOURCE]," where the "Content Title" may be the name of a movie, show, series, etc., and the "Content Source" may be a channel, an app name, a publisher, a network, etc. Other example patterns are possible.

The system **100** may determine whether a portion of a user utterance matches a known pattern. The portion of the user utterance may be processed to determine whether it matches a known pattern on-the-fly. For example, the user **105A** may begin speaking a command or a query to the remote control **111A.** The remote control **111A** may detect the user **105A** speaking and begin capturing the sound as a user utterance. The remote control **111A** may provide user utterance data indicative of the captured sound to the computing device **102** as a stream of data on-the-fly as the user **105A** is speaking. The computing device **102** may receive a first portion of the user utterance data (e.g., a first portion of the stream of user utterance data) and may begin process the stream of the user utterance data. For example, the computing device **102** may provide the first portion of the user utterance data to the ASR engine **102A** and/or the audio cache **102A** for transcription. The transcription of the first portion of the user utterance data may be the phrase "Show me free movies." The computing device **102** may determine that "Show me free movies" follows a known pattern. For example, the known pattern may be "[ACTION] [DESCRIPTOR] [CONTENT TYPE]." The "Action" may be a command to play, show, present, etc., something at a media device, such as the media device **107A.** The "Descriptor" may be a genre (e.g., action), an adjective (e.g., funny, free), etc. The "Content Type" may be a category of a content item(s), such as televisions shows, movies, etc.

The computing device **102** may determine that the phrase "Show me free movies" is a valid command based on it following the known pattern. The computing device **102** may be configured to employ a technique referred to herein as "command boosting." Command boosting may comprise a plurality of processing rules. The plurality of processing rules may control how the system **100** processes user utterances - or portions thereof. For example, the plurality of processing rules may indicate that a command or query is to be executed by the system **100** (e.g., processed and then executed) when a user utterance, or a portion thereof, is indicative of a valid command or query. In the above example, a first processing rule of the plurality of processing rules may correspond to the command associated with the transcribed phrase "Show me free movies." Based on the first processing rule, the computing device **102** may cause the command associated with the transcribed phrase "Show me free movies" to be executed immediately upon determining that the transcription satisfies the first processing rule. For example, the computing device **102** may cause the media device **107** to provide a listing of free movies via the EPG.

The plurality of processing rules for command boosting may each comprise one or more levels of confidence associated with transcribed words or phrases. The level of confidence associated with a particular transcribed word or phrase may be used when determining (e.g., by the computing device **102)** whether a command or query corresponding to the particular transcribed word or phrase is to be executed. The plurality of processing rules may inhibit command boosting to prevent a partial/incomplete user utterance from being processed. For example, a transcription for a first portion of user utterance data may be the word "up." The word "up" may be a command by itself (e.g., to move up a row in an EPG list), or it may be part of a larger overall command or query, such as "Up in the air," "Up by 3," etc. As another example, a first portion of user utterance data may be the phrase "Show me free movies." As described herein, the phrase "Show me free movies" may be a valid command, however, it may be part of a larger overall command that has yet to be processed, such as "Show me free movies about sharks," "Show me free movies about sharks on FutureFlix," etc. The first portion of the user utterance data may be part of a larger overall command/query in scenarios where the user utterance data is processed prior to the user having finished speaking the command/query. To prevent incomplete/partial user utterances from being processed and boosted (e.g., executed), the one or more levels of confidence may be used to ensure that certain transcriptions associated with valid commands/queries are boosted while others are not.

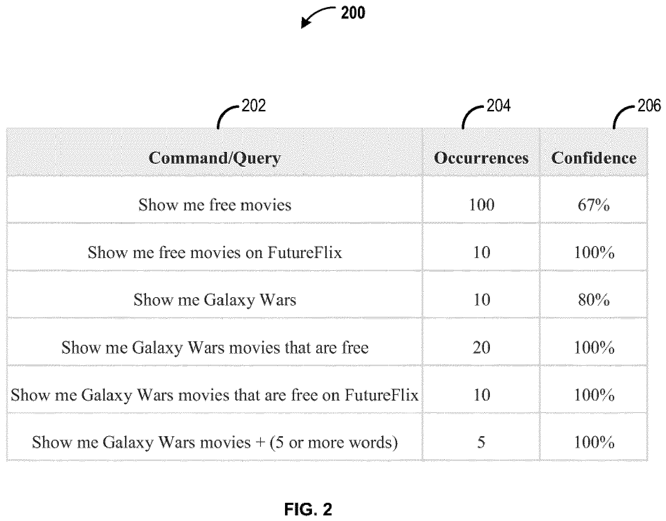

Table **200** in **FIG. 2** shows an example list of known commands or queries that may be used as part of the plurality of processing rules. Each of the known commands or queries may have a corresponding word/phrase **202,** a number of corresponding occurrences **204,** and a corresponding level of confidence **206** that the word/phrase **202** is a complete command intended by the user's utterance. The example list of known commands or queries shown in the table **200** is meant to be exemplary only and is not an exhaustive list of all commands/queries that may be included therein. The list of known commands or queries shown in the table **200** may be determined by the system **100** taking a large sample of previously processed commands/queries. The known commands or queries listed in the table **200** may be known to be associated with a complete user utterance. The one or more levels of confidence of each of the plurality of processing rules may be based on the known commands or queries. The list of known commands or queries and the corresponding level of confidence for each may be stored as any type of data and may be referenced by the computing device **102** when determining whether a portion of user utterance data that corresponds to a known command or query should be boosted or whether further portions of the user utterance data should be processed (e.g., to determine whether the user is still speaking a larger overall command/query). For example, the computing device **102** may not boost a portion of user utterance data that corresponds to a known command or query when the associated level of confidence (e.g., 67%) falls below a threshold (e.g., 75%).

As shown in the first row of the table **200,** out of 100 occurrences that the phrase "Show me free movies" was processed (e.g., transcribed and executed), the phrase may have been a complete user utterance only 67% of the time (e.g., for 67 out of the 100 total occurrences). For the remaining 33 occurrences, the phrase "Show me free movies" may have been part of a larger overall command or query. The level of confidence **206** that a command or query is a complete user utterance may be comparatively high when the command or query contains certain words or phrases. For example, the second and fourth rows of the table **200** indicate that commands or queries with the word "FutureFlix" are very likely to be complete user utterances. As another example, the third row of the table **200** indicates that commands or queries with the phrase "Galaxy Wars" are very likely to be complete user utterances. As shown in the fourth and fifth rows of the table **200,** commands including the phrase "Galaxy Wars" that have either the descriptor "free" or a phrase of 5 or more words following the phrase "Galaxy Wars" are guaranteed - at least for the corresponding sample set - to be complete user utterances. As described herein, the one or more levels of confidence of each of the plurality of processing rules may be based on the list shown in the table **200.** For example, when the computing device **102** determines that a portion of user utterance data is transcribed as being either of the commands in the fourth or fifth rows of the table **200,** the computing device **102** may boost the command without there being a significant level of risk that the portion of the user utterance data is not a complete user utterance (e.g., the user has completed speaking the command).

The computing device **102** may determine (e.g., calculate) a level of confidence for transcribed words or phrases that do not directly correspond with any of the known commands or queries listed in the table **200.** For example, the computing device **102** may determine that a transcribed portion of user utterance data contains two known commands. The two known commands may be joined by one or more "meta words." An example meta word may be the conjunction "and" (e.g., "Go up *and* select"). An example use of two meta words may be the phrase "[COMMAND/QUERY] [NUMBER] times," where the "Command/Query" is a known command or query and the "Number" is a whole number quantity (e.g., "Go up 3 times"). When a transcribed portion of user utterance data contains two or more known commands/queries that are joined by one or more of the meta words, the computing device **102** may determine a level of confidence that the transcribed portion of user utterance data is a complete user utterance. The determined level of confidence may be higher than the corresponding levels of confidence for each of the known commands/queries (e.g., by virtue of the transcribed portion containing the one or more meta words).

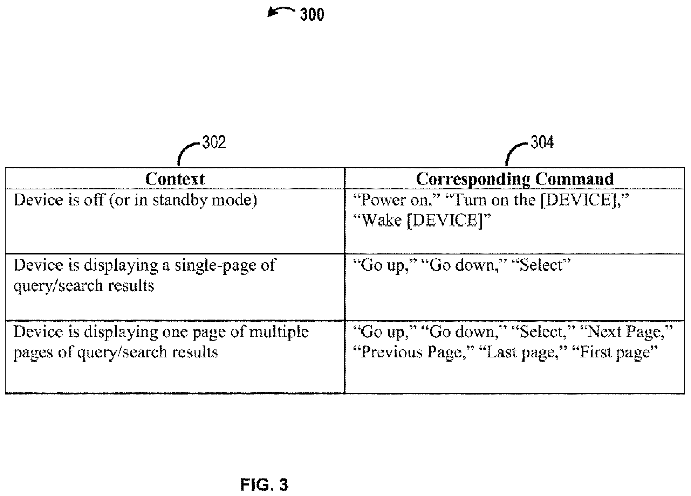

The system **100** may employ endpoint detection techniques to determine whether a spoken command or query is complete based on a determined context. For example, the system **100** may determine a context that corresponds to a transcribed portion of user utterance data, and the one or more levels of confidence of each of the plurality of processing rules may be based on a determined context that corresponds to a command or query. A particular command or query indicated by a transcribed portion of user utterance data may have a first level of confidence when a determined context is a first type, a second level of confidence when the determined context is a second type, and/or a third level of confidence when no context is determined. For example, a portion of user utterance data associated with the second user location **105B** may be transcribed as "Show me free movies." The computing device **102** may determine a level of confidence of 67% that the transcribed portion of the user utterance data is a complete command when there is no corresponding context determined. However, the computing device **102** may determine that the media device **107B** at the second user location **105B** is powered on and presenting an EPG when the portion of user utterance data was received and transcribed. In such a scenario, the determined context may be "Media Device is powered on and presenting the EPG," and the corresponding level of confidence may instead be 80%. Table **300** of **FIG. 3** shows example contexts **302** that may be determined and example corresponding commands/queries **304.** The computing device **102** may determine that one or more of the example contexts **302** corresponds to a transcribed portion of user utterance data. The example list of known commands or queries shown in the table **300** is meant to be exemplary only and is not an exhaustive list of all possible contexts and commands/queries that may be included therein.

As another example, the system **100** may employ endpoint detection techniques to determine whether a spoken command or query is complete by performing "tail sampling." Tail sampling may comprise a user device and/or the computing device **102** continuing to capture (e.g., attempt to detect) additional sounds following execution of a valid command or query corresponding to a transcribed portion of user utterance data. The user device and/or the computing device **102** may perform tail sampling for a period of time (e.g., a quantity of milliseconds, seconds, etc.) following execution of a valid command or query. For example, a portion of user utterance data associated with the third user location **105C** may be transcribed as "Show me free movies," and the computing device **102** may cause the media device **107C** to provide a listing of free movies via the EPG. A user device at the third user location **105C** and/or the computing device **102** may use tail sampling to determine whether the transcribed portion of the user utterance data represents a complete command or query intended by the user **105C.** For example, during the period of time during which tail sampling is performed, the user device at the third user location **105C** and/or the computing device **102** may determine that the user utterance data comprises a second portion.

The second portion may be provided to the ASR engine **102A** and/or the audio cache **102B** for transcription. The computing device **102** may determine that the second portion is indicative of a portion of a second command or query. For example, the computing device **102** may receive a transcription from the ASR engine **102A** and/or the audio cache **102B** indicating that the second portion of the user utterance is "on FutureFlix." The computing device **102** may determine that "on FutureFlix" is a portion of a valid second command of "Show me free movies on FutureFlix." As discussed herein, a first processing rule for command boosting may indicate that portions of user utterances that are determined to be indicative of the command of "Show me free movies" are to be boosted and executed immediately. The computing device **102** may cause the processing rules for command boosting associated with the command of "Show me free movies" to be disabled. The computing device **102** may cause the first processing rule to be disabled for the user device at the third user location **105C** - or user **105C** - based on the transcription indicating that the second portion of the user utterance is "on FutureFlix" and the determination that "on FutureFlix" is a portion of a valid second command of "Show me free movies on FutureFlix." Similar disabling of processing rules may be applied to a group of user devices - or users thereof - when similar determinations are made regarding user utterances.

The computing device **102** may cause processing rules for command boosting to be disabled in order to improve user experience. For example, the computing device **102** may receive a second user utterance comprising a first portion and second portion. The second portion may be received during the period of time during which tail sampling is performed. A transcription of a first portion of the second user utterance may be indicative of the first command of "Show me free movies," while a second portion of the second user utterance may be indicative of a portion of the second command of (e.g., "on FutureFlix"). The computing device **102** may not cause the first command or query to be boosted based on the first processing rule being disabled.

The computing device **102** may determine custom processing rules (e.g., new processing rules) for boosting commands. For example, based on the first portion of the second user utterance being associated with the disabled first processing rule, and based on the second portion of the second user utterance being indicative of the portion of the second command or query, the computing device **102** may determine a custom processing rule associated with the second command or query. The custom processing rule may cause the second command or query to be boosted when a transcription for a portion of user utterance data is determined to be indicative of the second command or query (e.g., one or more portions of user utterance data are determined to be indicative of the second command or query). The computing device **102** may cause the second command or query to be boosted based on the custom processing rule for the particular user device or a user thereof. The computing device **102** may cause the second command or query to be boosted based on the custom processing rule for a group of user devices or users thereof.

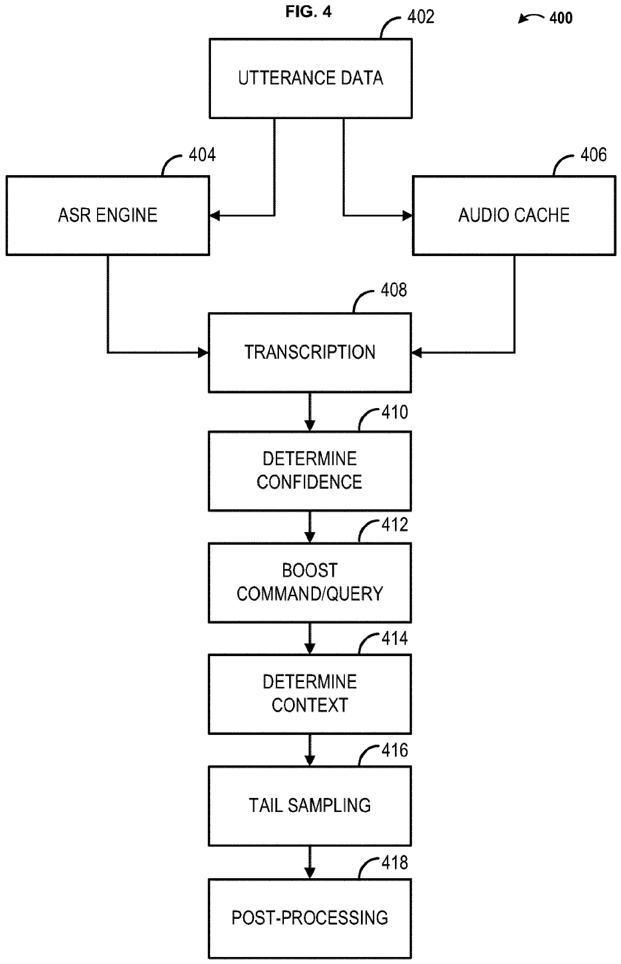

**FIG. 4** shows a flowchart of an example method **400** for improved speech and command detection. The method **400** may be performed by the system **100.** For example, the steps of the method **400** may be performed by any of the computing devices (e.g., voice-enabled devices) shown in the plurality of user locations **101A, 101B, 101C** and/or the computing device **102** shown in **FIG. 1****.** Some steps of the method **400** may be performed by a first computing device (e.g., the remote control **111A),** while other steps of the method **400** may be performed by a second computing device (e.g., the computing device **102).**

At step **402,** a user utterance may be received. A user utterance may be a word or phrase corresponding to a command or a query. For example, the user utterance may be received by a voice-enabled device. At step **404,** data indicative of the user utterance (e.g., user utterance data) - or a portion thereof - may be provided to an automatic speech recognition ("ASR") engine for transcription (or to a fingerprint matching engine, to analyze for a match). At step **406,** the user utterance data - or a portion thereof - may be provided to an audio cache for transcription. Step **404** may be performed in addition to or in lieu of step **406,** or vice-versa. At step **408,** a transcription of the user utterance data - or a portion thereof - may be provided.

The transcribed user utterance data may be indicative of a valid command or query, such as "Show me free movies." At step **410,** a level of confidence that the transcribed user utterance data is a complete command or query may be determined. A list of known commands or queries and a corresponding level of confidence for each may be referenced when determining the level of confidence that the transcribed user utterance data is a complete command or query. At step **412,** a technique referred to herein as "command boosting" may be used. Command boosting may comprise causing a command or query corresponding to the transcribed user utterance data to be executed when one or more processing rules for command boosting are satisfied. For example, a processing rule for command boosting may comprise causing cause a command or query corresponding to the transcribed user utterance data to be executed when the level of confidence meets or exceeds (e.g., satisfies) a threshold.

At step **414,** a context associated with the user utterance data may be determined. Step **414** may be performed as part of step **412.** For example, a plurality of context-based rules may be used to determine the level of confidence. An example context-based rule may comprise a command or query, such as "Show me free movies," a context, such as "Media Device is powered on," and a level of confidence, such as "80%." The voice-enabled device may indicate that the user utterance was received at a time during which a media device associated with the voice-enabled device was powered on. Based on the example context-based rule, the level of confidence associated with the transcribed user utterance data may therefore be 80%. The command or query corresponding to the transcribed user utterance may be boosted based on the level of context meeting or exceeding a context-based rule (e.g., being at least or equal to 805

As described herein, the command or query corresponding to the transcribed user utterance data may be boosted at step **412** (and step **414)** based on the level of confidence meeting or exceeding (e.g., satisfying) the threshold. However, the transcribed user utterance data may not represent a full/complete capture of the entire user utterance. For example, the transcribed user utterance data determined at step **408** and boosted (e.g., executed) at step **412** may only be a first portion of the entire user utterance (e.g., one or more words or phrases of the entire user utterance). The first portion may be indicative of a first command or query, such as "Show me free movies." Based on the command boosting at step **412** (and step **414),** the first command or query may be executed or begin to be executed. For example, a listing of free movies may be retrieved by and/or shown at a media device associated with the voice-enabled device.

At step **416,** tail sampling may be performed. Tail sampling may be performed to determine whether the transcribed user utterance data determined at step **408** and boosted (e.g., executed) at step **412** represents the entire user utterance. For example, the voice-enabled device may continue to capture (e.g., attempt to detect) additional sounds following execution of the first command or query corresponding to the transcribed user utterance data determined at step **408.** The voice-enabled device may perform tail sampling for a period of time (e.g., a quantity of milliseconds, seconds, etc.). For example, during the period of time during which tail sampling is performed, the voice-enabled device may detect via a microphone an energy level indicating that the user utterance comprises a second portion (e.g., the user who spoke the user utterance initially is still speaking).

At step **418,** post-processing may be performed when the tail sampling performed at step **416** indicates that the user utterance comprises the second portion. For example, the second portion of the user utterance may be provided to the ASR engine and/or the audio cache for transcription. A transcription of the second portion may be indicative of a portion of a second command. For example, the transcription of the second portion may be the words "on FutureFlix," and the second command may be the phrase "Show me free movies on FutureFlix." The second command may be a continuation of, and include, the first command. For example, the voice-enabled device may determine that the first portion of the user utterance was in fact a portion of the second command or query. In such examples, processing and/or execution of the first command may be paused and/or terminated. For example, retrieval and/or output/presentation of the listing of free movies may be paused and/or terminated when the tail sampling performed at step **416** indicates that the user utterance comprises the second portion.

Processing rules for command boosting that correspond to the command corresponding to the initially transcribed user utterance data may be disabled. That is, processing rules for command boosting that correspond to the first command or query of "Show me free movies" may be disabled when the tail sampling performed at step **416** indicates that the user utterance comprises the second portion. The processing rules for the command "Show me free movies" may be disabled for the voice-enabled device or for a group of voice-enabled user devices.

As another example, custom processing rules (e.g., new processing rules) for boosting commands may be determined as part of the post-processing performed at step **418.** For example, a custom processing rule associated with the second command may be determined. The custom processing rule may cause the second command to be boosted when a user utterance is determined to be indicative of the second command. The computing device may cause the second command to be boosted based on the custom processing rule for the particular voice-enabled device or for a group of voice-enabled user devices.

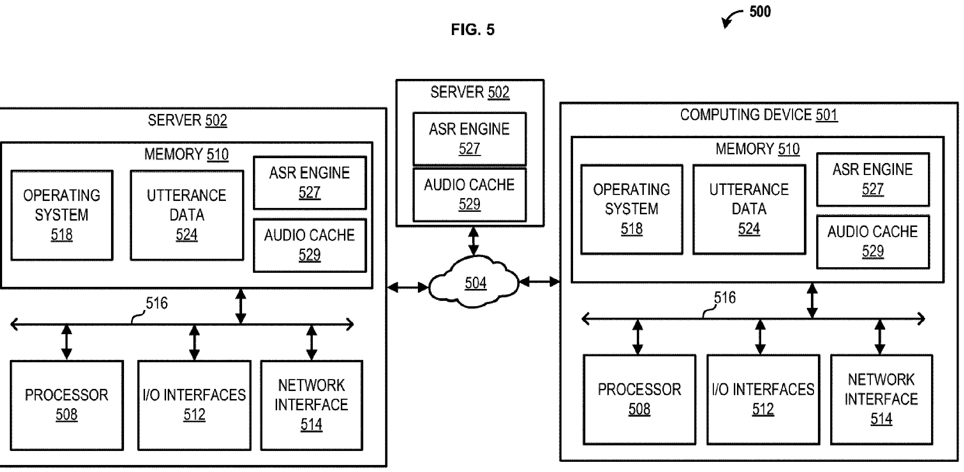

As discussed herein, the present methods and systems may be computer-implemented. **FIG. 5** shows a block diagram depicting a system/environment **500** comprising non-limiting examples of a computing device **501** and a server **502** connected through a network **504.** Either of the computing device **501** or the server **502** may be a computing device such as the computing device **102** and/or any of the computing devices at the plurality of user locations **101A, 101B, 101C** shown in **FIG. 1****.** In an aspect, some or all steps of any described method may be performed on a computing device as described herein. The computing device **501** may comprise one or multiple computers configured to store one or more of an ASR engine **527,** an audio cache **529,** and/or the like. The server **502** may comprise one or multiple computers configured to store user utterance data **524** (e.g., a plurality of user utterances). Multiple servers **502** may communicate with the computing device **501** via the through the network **504.**

The computing device **501** and the server **502** may be a digital computer that, in terms of hardware architecture, generally includes a processor **508,** system memory **810,** input/output (I/O) interfaces **512,** and network interfaces **514.** These components **(808, 510, 512,** and **514)** are communicatively coupled via a local interface **516.** The local interface **516** may be, for example, but not limited to, one or more buses or other wired or wireless connections, as is known in the art. The local interface **516** may have additional elements, which are omitted for simplicity, such as controllers, buffers (caches), drivers, repeaters, and receivers, to enable communications. Further, the local interface may include address, control, and/or data connections to enable appropriate communications among the aforementioned components.

The processor **508** may be a hardware device for executing software, particularly that stored in system memory **510.** The processor **508** may be any custom made or commercially available processor, a central processing unit (CPU), an auxiliary processor among several processors associated with the computing device **501** and the server **502,** a semiconductor-based microprocessor (in the form of a microchip or chip set), or generally any device for executing software instructions. When the computing device **501** and/or the server **502** is in operation, the processor **508** may be configured to execute software stored within the system memory **510,** to communicate data to and from the system memory **510,** and to generally control operations of the computing device **501** and the server **502** pursuant to the software.

The I/O interfaces **512** may be used to receive user input from, and/or for providing system output to, one or more devices or components. User input may be provided via, for example, a keyboard and/or a mouse. System output may be provided via a display device and a printer (not shown). I/O interfaces **512** may include, for example, a serial port, a parallel port, a Small Computer System Interface (SCSI), an infrared (IR) interface, a radio frequency (RF) interface, and/or a universal serial bus (USB) interface.

The network interface **514** may be used to transmit and receive from the computing device **501** and/or the server **502** on the network **504.** The network interface **514** may include, for example, a 10BaseT Ethernet Adaptor, a 10BaseT Ethernet Adaptor, a LAN PHY Ethernet Adaptor, a Token Ring Adaptor, a wireless network adapter (e.g., WiFi, cellular, satellite), or any other suitable network interface device. The network interface **514** may include address, control, and/or data connections to enable appropriate communications on the network **504.**

The system memory **510** may include any one or combination of volatile memory elements (e.g., random access memory (RAM, such as DRAM, SRAM, SDRAM, etc.)) and nonvolatile memory elements (e.g., ROM, hard drive, tape, CDROM, DVDROM, etc.). Moreover, the system memory **510** may incorporate electronic, magnetic, optical, and/or other types of storage media. Note that the system memory **510** may have a distributed architecture, where various components are situated remote from one another, but may be accessed by the processor **508.**

The software in system memory **510** may include one or more software programs, each of which comprises an ordered listing of executable instructions for implementing logical functions. In the example of **FIG. 5****,** the software in the system memory **510** of the computing device **501** may comprise the ASR engine **527,** the audio cache **529,** the user utterance data **524,** and a suitable operating system (O/S) **518.** In the example of **FIG. 5****,** the software in the system memory **510** of the server **502** may comprise the ASR engine **527,** the audio cache **529,** the user utterance data **524,** and a suitable operating system (O/S) **518.** The operating system **518** essentially controls the execution of other computer programs and provides scheduling, input-output control, file and data management, memory management, and communication control and related services.

For purposes of illustration, application programs and other executable program components such as the operating system **518** are shown herein as discrete blocks, although it is recognized that such programs and components may reside at various times in different storage components of the computing device **501** and/or the server **502.** An implementation of the method **400** may be stored on or transmitted across some form of computer readable media. Any of the disclosed methods may be performed by computer readable instructions embodied on computer readable media. Computer readable media may be any available media that may be accessed by a computer. By way of example and not meant to be limiting, computer readable media may comprise "computer storage media" and "communications media." "Computer storage media" may comprise volatile and non-volatile, removable and non-removable media implemented in any methods or technology for storage of information such as computer readable instructions, data structures, program modules, or other data. Exemplary computer storage media may comprise RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which may be used to store the desired information and which may be accessed by a computer.

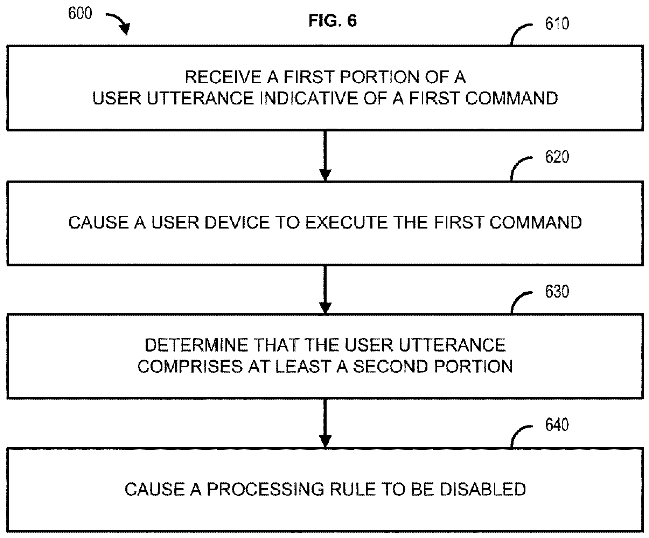

**FIG. 6** shows a flowchart of an example method **600** for improved speech and command detection. The method **600** may be performed in whole or in part by a single computing device, a plurality of computing devices, and the like. For example, the steps of the method **600** may be performed by any of the computing devices (e.g., voice-enabled devices) shown in the plurality of user locations **101A, 101B, 101C** and/or the computing device **102** shown in **FIG. 1****.** Some steps of the method **600** may be performed by a first computing device (e.g., the remote control **111A),** while other steps of the method **600** may be performed by a second computing device (e.g., the computing device **102).**

At step **610,** a first portion of a user utterance may be received. The first portion of the user utterance may be received by a computing device via a user device. The computing device may be a server, such as the computing device **102.** The user device may be any of the computing devices (e.g., voice-enabled devices) shown in the plurality of user locations **101A, 101B, 101C** in **FIG. 1****.** The computing device may determine a transcription of the first portion of the user utterance. For example, the computing device may determine the transcription of the first portion of the user utterance using an ASR engine and/or an audio cache. The transcription of the first portion of the user utterance may be indicative of a first command, such as "Show me free movies."

The user device and/or the computing device may employ command boosting. Command boosting may comprise the computing device, based on one or more processing rules, causing a command or query to be executed (e.g., processed and then executed) when a user utterance, or a portion thereof, is indicative of a valid command or query. At step **620,** the user device may be caused to (e.g., instructed to) execute the first command. For example, the user device may be caused to execute the first command based on a processing rule (e.g., of a plurality of processing rules). The processing rule may be associated with the first command. The processing rule may indicate that portions of user utterances that are determined to be indicative of the command of "Show me free movies" are to be executed immediately.

A level of confidence that the transcription of the first portion of the user utterance is correct and/or complete may be determined. For example, the computing device may determine a level of confidence that the transcription of the first portion of the user utterance is truly indicative of the complete first command. The computing device may use a plurality of context-based rules to determine the level of confidence. An example context-based rule may comprise a command or query, such as "Show me free movies," a context, such as "Media Device is powered on," and a level of confidence, such as "80%." The user device may indicate to the computing device that the user utterance was received at a time during which a media device associated with the user device was powered on. The computing device may determine the level of confidence associated with the first portion of the first user utterance is therefore 80%.

The computing device may be configured such that commands and queries having a confidence level that does not satisfy a threshold are caused not to be boosted. For example, the threshold may be "greater than 65%," and an example confidence level that does not satisfy the threshold may be less than or equal to 65%. In the example above regarding the first portion of the user utterance, the first command may be boosted, since the level of confidence associated with the first portion of the user utterance is 80% (e.g., greater than 65%). However, the transcribed user utterance data may not represent a full/complete capture of the entire user utterance. For example, the first portion of the user utterance may not comprise an entirety of the user utterance. Based on the command boosting, the first command may be executed or begin to be executed. For example, a listing of free movies may be retrieved by and/or shown at a media device associated with the computing device.

The user device and/or the computing device may be configured to employ a technique referred to herein as "tail sampling." Tail sampling may be employed to improve endpoint detection. Tail sampling may comprise the user device and/or the computing device continuing to capture (e.g., attempt to detect) additional sounds following execution of a valid command or query for a period of time (e.g., a quantity of milliseconds, seconds, etc.). Continuing with the above example, despite the computing device having caused the first command or query of "Show me free movies" to be executed, the user device and/or the computing device may use tail sampling to determine whether the first user utterance was in fact complete. At step **630,** the computing device may determine that the user utterance comprises at least a second portion. For example, during the period of time during which tail sampling is performed, the computing device may determine that the user utterance comprises at least the second portion.

The second portion may be indicative of a portion of a second command. For example, the second portion may be provided to the ASR engine and/or the audio cache for transcription. The computing device may determine that the second portion is indicative of the portion of the second command. The second command may be a continuation of, and include, the first command. For example, the computing device may receive a transcription from the ASR engine and/or the audio cache indicating that the second portion of the user utterance is "on FutureFlix." The computing device may determine that "on FutureFlix" is a portion of the second command of "Show me free movies on FutureFlix." The second command may include the first portion of the user utterance and the second portion of the user utterance. For example, the computing device may determine that the first portion of the user utterance was in fact a portion of the second command. Processing and/or execution of the first command may be paused and/or terminated based on the computing device determining that "on FutureFlix" is a portion of the second command of "Show me free movies on FutureFlix." For example, retrieval and/or output/presentation of the listing of free movies, which may have been initiated based on the first command being boosted, may be paused and/or terminated. The computing device may cause the second command to be processed and/or executed. For example, a listing of free movies on FutureFlix (e.g, an app, provider, etc.) may be retrieved by and/or shown at the media device associated with the computing device or the computing device itself.

At step **640,** the processing rule may be disabled. For example, the computing device may cause the processing rule to be disabled based on the second portion being indicative of the portion of the second command. The computing device may cause the processing rule to be disabled in order to improve user experience. Continuing with the above example, the computing device may receive a second user utterance comprising a first portion and second portion. The second portion may be received during the period of time during which tail sampling is performed. A transcription of a first portion of the second user utterance may be indicative of the first command or query (e.g., "Show me free movies"), while a second portion of the second user utterance may be indicative of a portion of the second command or query (e.g., "on FutureFlix"). The computing device may not cause the first command or query to be boosted based on the processing rule being disabled.

The computing device may determine custom processing rules (e.g., new processing rules) for boosting commands. For example, based on the first portion of the second user utterance being associated with the disabled processing rule, and based on the second portion of the second user utterance being indicative of the portion of the second command or query, the computing device may determine a custom processing rule associated with the second command or query. The custom processing rule may cause the second command or query to be boosted when a user utterance is determined to be indicative of the second command or query (e.g., one or more portions of a user utterance are determined to be indicative of the second command or query). The computing device may cause the second command or query to be boosted based on the custom processing rule for the particular user device or a user thereof. The computing device may cause the second command or query to be boosted based on the custom processing rule for a group of user devices or users thereof.

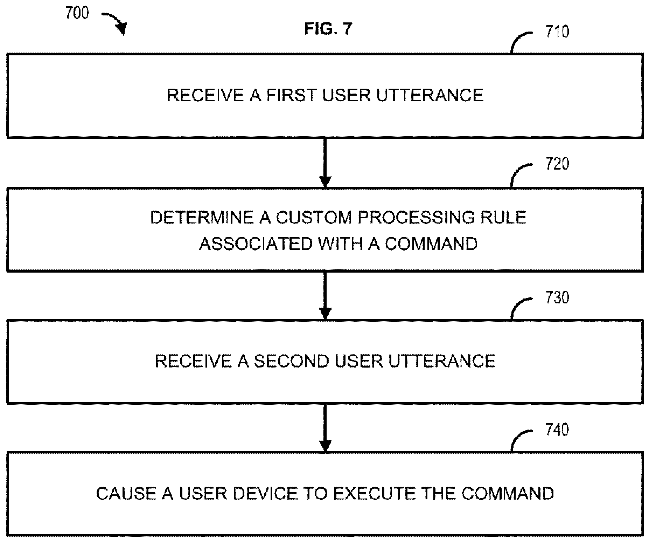

**FIG. 7** shows a flowchart of an example method **700** for improved speech and command detection. The method **700** may be performed in whole or in part by a single computing device, a plurality of computing devices, and the like. For example, the steps of the method **700** may be performed by any of the computing devices (e.g., voice-enabled devices) shown in the plurality of user locations **101A, 101B, 101C** and/or the computing device **102** shown in **FIG. 1****.** Some steps of the method **700** may be performed by a first computing device (e.g., the remote control **111A),** while other steps of the method **700** may be performed by a second computing device (e.g., the computing device **102).**

At step **710,** a first user utterance may be received. A first portion of the first user utterance may be received by a computing device via a user device. The computing device may be a server, such as the computing device **102.** The user device may be any of the computing devices (e.g., voice-enabled devices) shown in the plurality of user locations **101A, 101B, 101C** in **FIG. 1****.** A first portion of the first user utterance may be indicative of a first command associated with a first processing rule (e.g., of a plurality of processing rules). The first processing rule may comprise a disabled processing rule. For example, the computing device may determine a transcription of the first portion of the first user utterance. The computing device may determine the transcription of the first portion of the first user utterance using an ASR engine and/or an audio cache. The transcription of the first portion of the first user utterance may be indicative of a first command, such as "Show me free movies." The first command may be disabled (e.g., by the computing device) such that command boosting techniques described herein may not be applied to user utterances that comprise the first command.

A second portion of the first user utterance may be indicative of a portion of a second command. The computing device may determine a transcription of the second portion. The computing device may determine the transcription of the second portion of the first user utterance using an ASR engine and/or an audio cache. The transcription of the second portion of the first user utterance may be indicative of a portion of the second command, such as "on FutureFlix," and the second command in its entirety may be "Show me free movies on FutureFlix." The processing rule associated with the first command may have been previously disabled based on a portion of a prior user utterance being indicative of the portion of the second command (e.g., a prior user utterance comprised the portion "on FutureFlix".

At step **720,** a custom processing rule (e.g., a new processing rule) may be determined. For example, the custom processing rule may be determined based on the first portion of the first user utterance being indicative of the first command associated with the first processing rule (e.g., a disabled processing rule). The custom processing rule may be associated with the second command. The custom processing rule comprises one or more context-based rules associated with the user device.

At step **730,** a second user utterance may be received. For example, the computing device may receive the second user utterance via the user device. The second user utterance may be indicative of at least the first command and the second command. For example, a transcription of the second user utterance may indicate the second user utterance comprises "Show me free movies on FutureFlix" (e.g., both the first command and the second command). A level of confidence that the second user utterance is indicative of at least the first command and the second command may be determined. For example, the computing device may determine the level of confidence based on the custom processing rule. The computing device may use a plurality of context-based rules and processing rules to determine the level of confidence.

At step **740,** the user device may be caused to execute the second command. For example, the computing device may cause the user device to execute the second command based on the second user utterance and the custom processing rule. The computing device may determine whether the level of confidence satisfies a threshold. For example, the computing device may be configured such that commands and queries having a confidence level that does not satisfy the threshold are caused not to be boosted (e.g., executed). For example, the threshold may be "greater than 65%," and an example confidence level that does not satisfy the threshold may be less than or equal to 65%. The computing device may cause the user device to execute the second command based on the level of confidence satisfying the threshold.

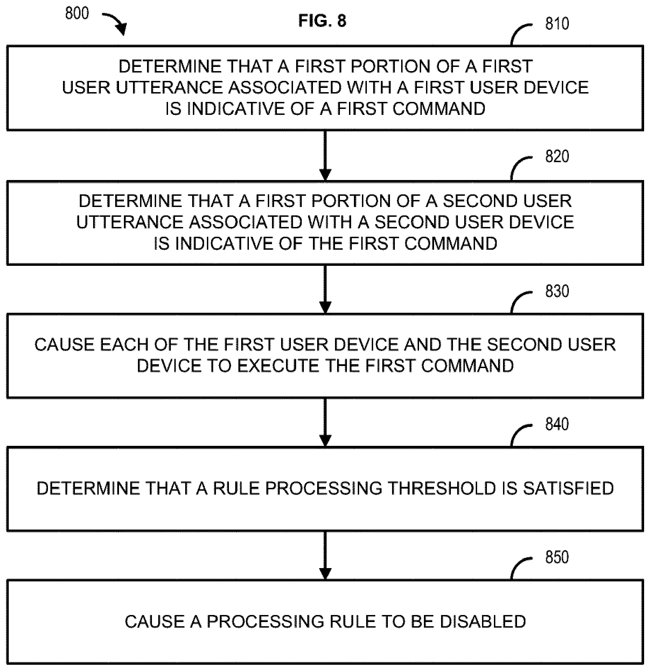

**FIG. 8** shows a flowchart of an example method **800** for improved speech and command detection. The method **800** may be performed in whole or in part by a single computing device, a plurality of computing devices, and the like. For example, the steps of the method **800** may be performed by any of the computing devices (e.g., voice-enabled devices) shown in the plurality of user locations **101A, 101B, 101C** and/or the computing device **102** shown in **FIG. 1****.** Some steps of the method **800** may be performed by a first computing device (e.g., the remote control **111A),** while other steps of the method **800** may be performed by a second computing device (e.g., the computing device **102).**

A first user utterance may be received. A first portion of the first user utterance may be received by a computing device via a first user device. The computing device may be a server, such as the computing device **102.** The first user device may be any of the computing devices (e.g., voice-enabled devices) shown in the plurality of user locations **101A, 101B, 101C** in **FIG. 1****.** The computing device may determine a transcription of the first portion of the first user utterance. For example, the computing device may determine the transcription of the first portion of the first user utterance using an ASR engine and/or an audio cache. At step **810,** the computing device may determine that the first portion of the first user utterance is indicative of a first command. For example, the transcription of the first portion of the first user utterance may be the phrase "Show me free movies," which may be the first command.

A level of confidence that the transcription of the first portion of the first user utterance is correct and/or complete may be determined. For example, the computing device may determine a level of confidence that the transcription of the first portion of the first user utterance is truly indicative of the complete first command. The computing device may use a plurality of context-based rules to determine the level of confidence. An example context-based rule may comprise a command or query, such as "Show me free movies," a context, such as "Media Device is powered on," and a level of confidence, such as "80%." The first user device may indicate to the computing device that the first user utterance was received at a time during which a media device associated with the first user device was powered on. The computing device may determine the level of confidence associated with the first portion of the first user utterance is therefore 80%.

A second user utterance may be received. For example, a first portion of the second user utterance may be received by the computing device via a second user device. The second user device may be any of the computing devices (e.g., voice-enabled devices) shown in the plurality of user locations **101A, 101B, 101C** in **FIG. 1****.** For example, the first user device may be associated with a first user location of the plurality of user locations **101A, 101B, 101C,** and the second user device may be associated with a second user location of the plurality of user locations **101A, 101B, 101C.** The computing device may determine a transcription of the first portion of the second user utterance. For example, the computing device may determine the transcription of the first portion of the second user utterance using the ASR engine and/or the audio cache. At step **820,** the computing device may determine that the first portion of the second user utterance is indicative of the first command. For example, the transcription of the first portion of the second user utterance may be the phrase "Show me free movies," which may be the first command. A level of confidence that the transcription of the first portion of the second user utterance is correct and/or complete may be determined. For example, the computing device may determine a level of confidence that the transcription of the first portion of the second user utterance is truly indicative of the complete first command. Similar to the first portion of the first user utterance, the computing device may use the plurality of context-based rules to determine the level of confidence.

The first user device, the second user device, and/or the computing device may employ command boosting. Command boosting may comprise the computing device, based on a plurality of processing rules, causing a command or query to be executed (e.g., processed and then executed) when a user utterance, or a portion thereof, is indicative of a valid command or query. At step **830,** the first user device and the second user device may each be caused to execute the first command. For example, the first user device and the second user device may each be caused to execute the first command based on a first processing rule of the plurality of processing rules being satisfied. For example, the first processing rule may be satisfied when the corresponding levels of confidence that the transcription of the first portion of the first user utterance and the transcription of the first portion of the second user utterance each meet or exceed a threshold level of confidence (e.g., each level of confidence may be greater than or equal to 80%). The first processing rule may be associated with the first command. The first processing rule may indicate that levels of confidence for portions of user utterances that are determined to satisfy the threshold level of confidence are to be executed immediately (e.g., the first command "Show me free movies" is to be executed).

The first user device, the second user device, and/or the computing device may be configured to employ a technique referred to herein as "tail sampling." Tail sampling may be employed to improve endpoint detection. Tail sampling may comprise the first user device, the second user device, and/or the computing device continuing to capture (e.g., attempt to detect) additional sounds following execution of a valid command or query for a period of time (e.g., a quantity of milliseconds, seconds, etc.). Continuing with the above example, despite the computing device having caused both the first user device and the second user device to execute the first command of "Show me free movies," the first user device and/or the computing device may use tail sampling to determine whether the first user utterance was in fact complete, and the second user device and/or the computing device may use tail sampling to determine whether the second user utterance was in fact complete. At step **840,** the computing device may determine that a rule processing threshold is satisfied. For example, the computing device may determine that the first user utterance and the second user utterance each comprise at least a second portion. For example, during the period of time during which tail sampling is performed, the computing device may determine that the first user utterance and the second user utterance each comprise at least the second portion.

The second portion may be indicative of a portion of a second command. For example, the second portion of each of the first user utterance and the second user utterance may be provided to the ASR engine and/or the audio cache for transcription. The computing device may determine that the second portion of each of the first user utterance and the second user utterance is indicative of the portion of the second command. For example, the computing device may receive a transcription from the ASR engine and/or the audio cache indicating that the second portion of each of the first user utterance and the second user utterance is "on FutureFlix." The computing device may determine that "on FutureFlix" is a portion of the second command of "Show me free movies on FutureFlix." The second command may include the first portion of each of the first user utterance and the second user utterance (e.g., "Show me free movies") and the second portion of each of the first user utterance and the second user utterance (e.g., "on FutureFlix"). The computing device may determine that the rule processing threshold is satisfied based on the first processing rule being satisfied and the first user utterance and the second user utterance each comprising at least the second portion of the second command. For example, the rule processing threshold may be satisfied when (1) it is determined that two or more user utterances each comprise a first portion indicative of a first command and (2) it is determined that the two or more user utterances each comprise a second portion indicative of a second command.

The rule processing threshold may enable the first user device, the second user device, and/or the computing device to be customized/specially configured based on user utterances that are processed over time. At step **850,** the first processing rule may be disabled. For example, the first user device, the second user device, and/or the computing device may disable the first processing rule based on the rule processing threshold being satisfied. The first user device, the second user device, and/or the computing device may cause the first processing rule to be disabled in order to improve user experience. Continuing with the above example, the computing device may receive a further user utterance via the first user device and/or the second user device comprising a first portion and second portion. The second portion of the further user utterance may be received during the period of time during which tail sampling is performed. A transcription of a first portion of the further user utterance may be indicative of the first command (e.g., "Show me free movies"), while a second portion of the further user utterance may be indicative of a portion of the second command or query (e.g., "on FutureFlix"). The computing device may not cause the first command to be boosted based on the first processing rule being disabled.

The first user device, the second user device, and/or the computing device may determine custom processing rules (e.g., new processing rules) for boosting commands. For example, based on the first portion of the further user utterance being associated with the disabled first processing rule, and based on the second portion of the further user utterance being indicative of the portion of the second command, a custom processing rule associated with the second command may be determined. The custom processing rule may cause the second command to be boosted when a user utterance is determined to be indicative of the second command (e.g., one or more portions of a user utterance are determined to be indicative of the second command). The first user device, the second user device, and/or the computing device may cause the second command to be boosted based on the custom processing rule for the particular user device or a user thereof. The computing device may cause the second command or query to be boosted based on the custom processing rule for a group of user devices or users thereof.

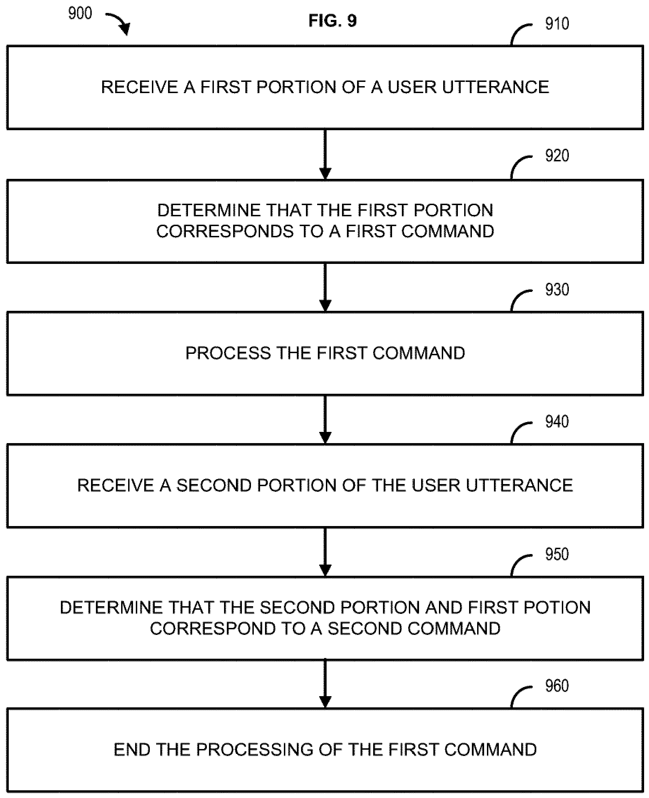

**FIG. 9** shows a flowchart of an example method **900** for improved speech and command detection. The method **900** may be performed in whole or in part by a single computing device, a plurality of computing devices, and the like. For example, the steps of the method **900** may be performed by any of the computing devices (e.g., voice-enabled devices) shown in the plurality of user locations **101A, 101B, 101C** and/or the computing device **102** shown in **FIG. 1****.** Some steps of the method **900** may be performed by a first computing device (e.g., the remote control **111A),** while other steps of the method **900** may be performed by a second computing device (e.g., the computing device **102).**

At step **910,** a first portion of a first user utterance may be received by a computing device. For example, the computing device may receive the first portion of the first user utterance via a user device. The computing device may be a server, such as the computing device **102.** The user device may be any of the computing devices (e.g., voice-enabled devices) shown in the plurality of user locations **101A, 101B, 101C** in **FIG. 1****.** The computing device may determine a transcription of the first portion of the first user utterance. For example, the computing device may determine the transcription of the first portion of the first user utterance using an ASR engine and/or an audio cache.

The user device and/or the computing device may employ command boosting. Command boosting may comprise the computing device, based on a plurality of processing rules, causing a command or query to be executed (e.g., processed and then executed) when a user utterance, or a portion thereof, is indicative of a valid command or query. At step **920,** the computing device may determine that the first portion of the first user utterance corresponds to a first command. For example, the computing device may determine that the first portion of the first user utterance corresponds to the first command based on a processing rule (e.g., of a plurality of processing rules). The transcription of the first portion of the first user utterance may be the phrase "Show me free movies," which may be the first command. The processing rule may be associated with the first command. The processing rule may indicate that portions of user utterances that are determined to be indicative of the command of "Show me free movies" are to be processed for executed immediately (e.g., as soon as the computing device determines that the first portion corresponds to the first command.

At step **930,** the first command may be processed for execution of the first command. For example, the computing device may cause a listing of free movies to be retrieved by and/or shown at the user device or a media device associated with the user device. A level of confidence that the transcription of the first portion of the user utterance is correct and/or complete may be determined. For example, the computing device may determine a level of confidence that the transcription of the first portion of the user utterance is truly indicative of the complete first command. The computing device may use a plurality of context-based rules to determine the level of confidence. An example context-based rule may comprise a command or query, such as "Show me free movies," a context, such as "Media Device is powered on," and a level of confidence, such as "80%." The user device may indicate to the computing device that the user utterance was received at a time during which a media device associated with the user device was powered on. The computing device may determine the level of confidence associated with the first portion of the first user utterance is therefore 80%.

The computing device may be configured such that commands and queries having a confidence level that does not satisfy a threshold are caused not to be boosted. For example, the threshold may be "greater than 65%," and an example confidence level that does not satisfy the threshold may be less than or equal to 65%. In the example above regarding the first portion of the user utterance, the first command may be boosted, since the level of confidence associated with the first portion of the user utterance is 80% (e.g., greater than 65%). However, the transcribed user utterance data may not represent a full/complete capture of the entire user utterance. For example, the first portion of the user utterance may not comprise an entirety of the user utterance. Based on the command boosting, the first command may be executed or begin to be executed. For example, a listing of free movies may be retrieved by and/or shown at a media device associated with the computing device.

The user device and/or the computing device may be configured to employ a technique referred to herein as "tail sampling." Tail sampling may be employed to improve endpoint detection. Tail sampling may comprise the user device and/or the computing device continuing to capture (e.g., attempt to detect) additional sounds following execution of a valid command or query for a period of time (e.g., a quantity of milliseconds, seconds, etc.). Continuing with the above example, despite the computing device having caused the first command or query of "Show me free movies" to be executed, the user device and/or the computing device may use tail sampling to determine whether the first user utterance was in fact complete. At step **940,** the computing device receive a second portion of the user utterance. For example, the computing device may receive the second portion during the period of time during which tail sampling is performed. At step **950,** the computing device may determine that the second portion and the first portion correspond to a second command. For example, the second portion may be provided to the ASR engine and/or the audio cache for transcription. The computing device may determine that the second portion of the user utterance is indicative of a portion of the second command. The second command may be a continuation of, and include, the first command. For example, the computing device may receive a transcription from the ASR engine and/or the audio cache indicating that the second portion of the user utterance is "on FutureFlix." The computing device may determine that "on FutureFlix" is a portion of the second command of "Show me free movies on FutureFlix." The second command may include the first portion of the user utterance and the second portion of the user utterance. For example, the computing device may determine that the first portion of the user utterance was in fact a portion of the second command. At step **960,** the processing and/or execution of the first command may be paused and/or ended (e.g., terminated). For example, processing and/or execution of the first command may be paused and/or ended based on the computing device determining that "on FutureFlix" is a portion of the second command of "Show me free movies on FutureFlix." For example, retrieval and/or output/presentation of the listing of free movies, which may have been initiated based on the first command being boosted, may be paused and/or terminated. The computing device may cause the second command to be processed and/or executed. For example, a listing of free movies on FutureFlix (e.g, an app, provider, etc.) may be retrieved by and/or shown at the media device associated with the computing device or the computing device itself.

The processing rule may be disabled. For example, the computing device may cause the processing rule to be disabled based on the second portion being indicative of the portion of the second command. The computing device may cause the processing rule to be disabled in order to improve user experience. Continuing with the above example, the computing device may receive a second user utterance comprising a first portion and second portion. The second portion may be received during the period of time during which tail sampling is performed. A transcription of a first portion of the second user utterance may be indicative of the first command or query (e.g., "Show me free movies"), while a second portion of the second user utterance may be indicative of a portion of the second command or query (e.g., "on FutureFlix"). The computing device may not cause the first command or query to be boosted based on the processing rule being disabled.

The computing device may determine custom processing rules (e.g., new processing rules) for boosting commands. For example, based on the first portion of the second user utterance being associated with the disabled processing rule, and based on the second portion of the second user utterance being indicative of the portion of the second command or query, the computing device may determine a custom processing rule associated with the second command or query. The custom processing rule may cause the second command or query to be boosted when a user utterance is determined to be indicative of the second command or query (e.g., one or more portions of a user utterance are determined to be indicative of the second command or query). The computing device may cause the second command or query to be boosted based on the custom processing rule for the particular user device or a user thereof. The computing device may cause the second command or query to be boosted based on the custom processing rule for a group of user devices or users thereof.

Hereinafter, various characteristics of various embodiments of the invention will be highlighted in a set of examples or paragraphs. These characteristics are not to be interpreted as being limiting on the invention or inventive concept, but are provided merely as a highlighting of some characteristics of the invention as described in the description, without suggesting a particular order of importance or relevancy of such characteristics. The invention is only limited by the appended claims presented in the correspondingly named section.

The first example relates to a method comprising: receiving, by a computing device via a user device, a first portion of a user utterance; determining, based on a processing rule, that the first portion corresponds to a first command; processing the first command for execution; receiving a second portion of the user utterance; determining that the second portion and the first portion correspond to a second command, wherein the second command is different than the first command; and ending the processing of the first command.

The second example relates to a method of the first example, further comprising determining a transcription of the first portion of the user utterance; and determining that the transcription of the first portion of the user utterance comprises the first command.

The third example relates to a method of the first example, further comprising: determining, based on the processing rule, a level of confidence that the first portion of the user utterance is indicative of the first command.

The fourth example relates to method of the third example, wherein processing the first command for execution of the first command comprises determining that the level of confidence satisfies a threshold.

The fifth example relates to a method of the first example, wherein the processing rule comprises one or more context-based rules associated with the user device.

The sixth example relates to a method of the first example, wherein the second command comprises the first portion of the user utterance and the second portion of the user utterance.

The seventh example relates to method of the first example, wherein ending the processing of the first command for execution comprises causing the user device to at least one of: terminate processing of the first command or terminate execution of the first command.

The eighth example relates to a method comprising: receiving, by a computing device via a user device, a first user utterance, wherein a first portion of the first user utterance is indicative of a first command associated with a first processing rule, and wherein the first portion and a second portion of the first user utterance are indicative of a second command; determining, based on the first portion of the first user utterance being indicative of the first command associated with the first processing rule, a new processing rule associated with the second command; receiving, via the user device, a second user utterance indicative of at least the first command and the second command; and causing, based on the second user utterance and the new processing rule, the user device to execute the second command.

The ninth example relates to method of the eighth example, further comprising:
determining a transcription of the first portion of the user utterance; and
determining that the transcription of the first portion of the user utterance comprises the first command.

The tenth example relates to a method of the eighth example, further comprising: determining, based on the new processing rule, a level of confidence that the second user utterance is indicative of at least the first command and the second command.

The eleventh example relates to a method of the tenth example, wherein causing the user device to execute the first command comprises determining that the level of confidence satisfies a threshold.

The twelfth example relates to a method of the eighth example, wherein the new processing rule comprises one or more context-based rules associated with the user device.

The thirteenth example relates to a method of the eighth example, wherein the second command comprises the first portion of the first user utterance and the second portion of the first user utterance.

The fourteenth example relates to a method of the eighth example, further comprising: causing, based on the first portion and the second portion of the first user utterance being indicative of the second command, the first processing rule to be disabled.

The fifteenth example relates to a method comprising: determining, by a computing device, that a first portion of a first user utterance associated with a first user device is indicative of a first command; determining that a first portion of a second user utterance associated with a second user device is indicative of the first command, wherein the first user device is associated with a first user location, and wherein the second user device is associated with a second user location; causing, based on a processing rule associated with the first command, each of the first user device and the second user device to execute the first command; determining, based on the first user utterance and the second user utterance each comprising at least a second portion indicative of a portion of a second command, that a rule processing threshold is satisfied; and causing, based on the rule processing threshold being satisfied, the processing rule to be disabled.

The sixteenth example relates to a method of the fifteenth example, further comprising: determining a transcription of the first portion of the first user utterance associated with the first user device; and determining that the transcription of the first portion of the first user utterance associated with the first user device comprises the first command.

The seventeenth example relates to a method of the fifteenth example, further comprising: determining, based on the processing rule, a level of confidence that the first portion of the first user utterance associated with the first user device is indicative of the first command.

The eighteenth example relates to a method of the seventeenth example, wherein causing the first user device to execute the first command comprises determining that the level of confidence satisfies the rule processing threshold.

The nineteenth example relates to a method of the fifteenth example, wherein the processing rule comprises one or more context-based rules associated with the first user device and the second user device.

The twentieth example relates to a method of the fifteenth example, wherein the second command comprises the first portion and the second portion.

While specific configurations have been described, it is not intended that the scope be limited to the particular configurations set forth, as the configurations herein are intended in all respects to be possible configurations rather than restrictive. Unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; the number or type of configurations described in the specification.

It will be apparent to those skilled in the art that various modifications and variations may be made without departing from the scope of the methods and systems described herein. Other configurations will be apparent to those skilled in the art from consideration of the specification and practice described herein. It is intended that the specification and described configurations be considered as exemplary only, with a true scope of the methods and systems described herein indicated by the following claims.

## Claims

1. A method comprising:
receiving, by a computing device via a user device, a first portion of a user utterance;
determining, based on a processing rule, that the first portion corresponds to a first
command;
processing the first command for execution;
receiving a second portion of the user utterance;
determining that the second portion and the first portion correspond to a second
command, wherein the second command is different than the first command; and ending the processing of the first command.

2. The method of claim 1, further comprising:
determining a transcription of the first portion of the user utterance; and
determining that the transcription of the first portion of the user utterance comprises the
first command.

3. The method of any one of the preceding claims, wherein the processing rule comprises one or more context-based rules associated with the user device.

4. The method of any one of the preceding claims, wherein the second command comprises the first portion of the user utterance and the second portion of the user utterance.

5. The method of any one of the preceding claims, wherein ending the processing of the first command for execution comprises causing the user device to at least one of: terminate processing of the first command or terminate execution of the first command.

6. The method of any one of the preceding claims, further comprising: determining, based on the processing rule, a level of confidence that the first portion of the user utterance is indicative of the first command.

7. The method of claim 6, wherein processing the first command for execution of the first command comprises determining that the level of confidence satisfies a threshold.

8. The method of any one of the preceding claims, further comprising: determining, based on the first portion of the user utterance being indicative of the first command, a new processing rule associated with the second command.

9. The method of claim 8, further comprising:
receiving, via the user device, a second user utterance indicative of at least the first
command and the second command; and
causing, based on the second user utterance and the new processing rule, the user device
to execute the second command

10. The method of any one of claims 1-7, further comprising:
determining that a first portion of a second user utterance associated with a second user
device is indicative of the first command, wherein the user device is associated with a first user location, and wherein the second user device is associated with a second user location;
causing, based on the processing rule, each of the user device and the second user device
to execute the first command.

11. The method of claim 10, further comprising:
determining, based on the user utterance and the second user utterance each comprising at
least a second portion indicative of a portion of a second command, that a rule processing threshold is satisfied.

12. The method of claim 11, further comprising:
causing, based on the rule processing threshold being satisfied, the processing rule to be
disabled.

13. A non-transitory computer-readable medium storing processor executable instructions that, when executed by one or more processors, cause the one or more processors to perform the method of any one of claims 1-12.

14. A system comprising:
a first computing device configured to perform the method of any one of claims 1-12; and
a user device configured to send the user utterance.

15. An apparatus comprising:
one or more processors; and
memory storing processor executable instructions that, when executed by the one or
more processors, cause the apparatus to perform the method of any one of claims 1-12.
